# EUROPÄISCHE PATENTSCHRIFT

(11) **EP 2 790 916 B1**
(45) Veröffentlichungstag und Bekanntmachung des Hinweises auf die Patenterteilung: **27.04.2016**
(21) Anmeldenummer: 12815621.3
(22) Anmeldetag: 13.12.2012
(51) Int. Cl.: B32B 17/10

(54) **VERBUNDGLAS FÜR DIE ANWENDUNG IN FAHRZEUGEN ODER DER ARCHITEKTUR**
LAMINATED GLASS FOR USE IN VEHICLES OR IN ARCHITECTURE
VERRE COMPOSITE DESTINÉ À ÊTRE UTILISÉ DANS LES VÉHICULES OU EN ARCHITECTURE

(30) Priorität: 15.12.2011 DE 202011109312 U
(43) Veröffentlichungstag der Anmeldung: 22.10.2014
(73) Patentinhaber: Southwall Technologies Inc., Palo Alto, CA 94303 (US); Thielsch, Roland, 01189 Dresden (DE)
(72) Erfinder: THIELSCH, Roland, 01189 Dresden (DE); KLEINHEMPEL, Ronny, 09423 Gelenau (DE); WAHL, Andre, 01900 Großröhrsdorf (DE)
(74) Vertreter: Virnekäs, Bernhard
(86) Internationale Anmeldenummer: PCT/DE2012/001206
(87) Internationale Veröffentlichungsnummer: WO 2013/087064

(56) Entgegenhaltungen:
- WO-A1-90/02653
- US-A- 5 071 206
- US-A- 5 306 547
- US-A1- 2007 264 479

## Beschreibung

Die Erfindung betrifft ein Verbundglas für die Anwendung in Fahrzeugen oder der Architektur mit einer selektiven Reflexion elektromagnetischer Strahlung aus dem Wellenlängenspektrum des Sonnenlichts. Hierfür werden optisch teilweise transparente Mehrschichtsysteme eingesetzt.

Solche Mehrschichtsysteme werden für eine gezielte selektive Beeinflussung der Transmission sowie Reflexion von elektromagnetischer Strahlung, die von der Sonne emittiert wird, eingesetzt und dabei auf für die elektromagnetische Strahlung transparenten Substraten, wie insbesondere Glas oder Polymerfolien als Dünnschichten durch an sich bekannte Vakuumbeschichtungsverfahren, insbesondere PVD-Verfahren ausgebildet. Damit ist das Ziel verbunden, einen möglichst hohen Anteil der Strahlung im nicht-sichtbaren Bereich (z.B. solarer Energiebereich, bzw. nah-infraroter Spektralbereich) zu reflektieren, so dass der Anteil an transmittierter solarer Energie minimiert wird. Ein besonderes Ziel besteht darin, den Wert der durch eine Verbundverglasung, die mit einem derartigem Mehrschichtsystem auf besagtem Träger ausgestattet ist, der hindurch gelassen totalen solaren Transmission T_{TS} (Berechnet nach *DIN ISO* 13837, Fall 1) auf maximal 40 %, der von der Sonne emittierten und auf der Erdoberfläche auftreffenden elektromagnetischen Strahlung, zu begrenzen. Dadurch soll die Erwärmung im Inneren von Räumen oder Fahrzeugen minimiert und der energetische Aufwand zur Schaffung eines dem im Innern befindlichen Personen angenehmen Umgebungsklimas reduziert werden. Im Gegensatz dazu, soll aber ein möglichst hoher Anteil der Strahlung im Bereich des sichtbaren Lichts nicht reflektiert, möglichst auch nicht absorbiert werden, so dass der für das menschliche Auge sichtbare Anteil der Sonnenstrahlung (Tᵥᵢₛ, berechnet nach ASTM E 308 für Beleuchtungsquelle A und Beobachter 2°, Rᵥᵢₛ wird gegebenenfalls nach dem gleichen Standard berechnet) oberhalb 70 % gehalten werden kann. Diese Anforderung für Tᵥᵢₛ ist für die Anwendung bei Fahrzeugverglasungen gesetzlich vorgeschrieben.

Hierfür werden seit langem Mehrschichtsysteme eingesetzt, die auf Substraten (Glas oder Kunststoff) ausgebildet sind. Dabei kann es sich um Wechselschichtsysteme handeln, bei denen hoch und niedriger brechende Schichten dielektrischer Materialien aufeinander ausgebildet werden.

Häufig werden auch dünne Metallschichten im Wechsel mit dünnen dielektrischen Schichten (Oxide und Nitride) eingesetzt. Diese Oxide oder Nitride sollen optische Brechzahlen bei einer Wellenlänge von 550 nm im Bereich 1,8 bis 2,5 aufweisen.

Neben anderen reflektierenden Metallen, wie Gold oder Kupfer werden für die Metallschichten vorzugsweise Silber oder Silberlegierungen (Ag-Au, Ag-Cu, Ag-Pd und andere) eingesetzt, die sehr gute optische Eigenschaften für diese Anwendungen aufweisen.

Neben der Beeinflussung der selektiven Transmission und Reflexion, der von der Sonne emittierten elektromagnetischen Strahlung, besteht auch ein ästhetisches Bedürfnis bei Verglasungen, die bei Fahrzeugen oder in der Architektur eingesetzt werden, was den optischen farblichen Eindruck betrifft. So weisen herkömmliche optische Mehrschichtsysteme in Reflexion einen Farbeindruck auf, der neutral oder nicht dominant grün oder blau ist. Häufig ist es aber auch gewünscht einen anderen Farbeindruck zu erreichen, der dem Gesamteindruck eines Fahrzeugs oder Gebäudes angepasst ist.

Es ist daher Aufgabe der Erfindung, ein Verbundglas für Anwendungen bei Fahrzeugen oder in der Architektur zur Verfügung zustellen, das einen intensiven blauen Farbeindruck aufweist und ein T_{TS} < 40% realisiert und vorzugsweise eine hohe visuelle Transmission Tᵥᵢₛ >70% hat.

Erfindungsgemäß wird diese Aufgabe mit einem Verbundglas, das die Merkmale des Anspruchs 1 aufweist, gelöst. Vorteilhafte Ausgestaltungen und Weiterbildungen können mit in untergeordneten Ansprüchen bezeichneten Merkmalen realisiert werden.

Das erfindungsgemäße Verbundglas weist ein optisches Mehrschichtsystem auf, mit dem eine totale solare Transmission T_{TS} < 40 %, eine Transmission Tᵥᵢₛ im Wellenlängenbereich des sichtbaren Lichts > 70 %, eine Reflexion im Wellenlängenbereich des sichtbaren Lichts Rᵥᵢₛ <12% erreicht ist. Das optische Mehrschichtsystem kann unmittelbar auf einer Glasoberfläche oder auf einer optisch transparenten Polymerfolie bzw. einem anderen geeigneten Trägermaterial ausgebildet sein. Die beschichtete Polymerfolie oder ein Trägermaterial kann mit einem Haftvermittler oder einer haftvermittelnden Folie auf einer Glasoberfläche flächig befestigt oder zwischen zwei Glasscheiben, die so miteinander verbunden werden können, eingefasst werden.

Die energetische Transmission, beispielweise die totale solare Transmission T_{TS} wird nach ISO 13837 bestimmt.

Außerdem weist das Verbundglas eine Reflexionsfarbe auf, die nach ASTM 308 für Transmission und Reflexion bei senkrechtem Lichteinfall innerhalb eines Farbraums (Farbbox), der durch die Werte Ra* von -5 bis 5 und Rb* von - 25 bis -40 begrenzt ist, und die Reflexionsfarbe dabei mit einer Beleuchtungsquelle D65 und Standardbeobachter 10° bestimmt ist.

Allein oder zusätzlich kann die Reflexionsfarbe bei einem Lichteinfallswinkel von 60° auch innerhalb eines Farbraums (Farbbox), der durch die Werte Ra* von 0 bis 12 und Rb* von -20 bis -30 begrenzt ist, liegen, wobei die Reflexionsfarbe dabei mit einer Beleuchtungsquelle D65 und Standardbeobachter 10° bestimmt worden ist.

Für die Bestimmung der Reflexionsfarbe kann ein Spektralphotometer, bevorzugt mit Integralkugel, wie es beispielsweise von der Firma Perkin Elmer unter der Typbezeichnung PE900 erhältlich ist, eingesetzt werden.

Die Reflexionsfarbe kann bei senkrechtem Lichteinfall um ein Intensitätszentrum Ra* = 0, Rb* = -35 innerhalb des/der Farbraumes/-räume in einem Bereich von ± 5, bevorzugt ± 2 jeweils für die Werte von Ra* und Rb* innerhalb eines kleineren Farbraumes liegen.

Bei einem Lichteinfallswinkel von 60° können um ein Intensitätszentrum Ra* = 7, Rb* = -25 die Werte für die Reflexionsfarbe innerhalb des/der Farbraumes/- räume in einem Bereich von ± 5, bevorzugt ± 2 jeweils für die Werte von Ra* und Rb*, liegen.

Die Größe der Farbräume ergibt sich aufgrund herstellungsbedingter Schichtdickenschwankungen (typisch ±2% der jeweiligen Zielschichtdicke), die die exakte Farblage beeinflussen.

Ein optisches Mehrschichtsystem für eine selektive Reflexion elektromagnetischer Strahlung aus dem Wellenlängenspektrum des Sonnenlichts kann mit mindestens einer Schicht aus Silber- bzw. einer Silberlegierung und mit mindestens einer dielektrischen Schicht gebildet sein. Eine Silberschicht oder eine mit einer Silberlegierung gebildete Schicht kann eine Schichtdicke im Bereich 5 nm bis 25 nm und eine dielektrische Schicht kann eine Schichtdicke im Bereich 5 nm bis 150 nm aufweisen.

Günstig ist es, wenn eine Silberschicht oder eine mit einer Silberlegierung gebildete Schicht mit jeweils einer Keimschicht (seed layer) und einer Deckschicht (cap layer) an beiden Oberflächen vollflächig beschichtet ist Es kann neben reinem Silber auch eine Silberlegierung in der Au, Pd oder Cu mit geringen Anteilen enthalten sind, eingesetzt werden. Nachfolgend werden die Schichten generell als Silberschicht bezeichnet. Bei Silberlegierungen sollte der Anteil an enthaltenem weiteren Metall sehr klein, möglichst kleiner 2 % gehalten sein.

Ein optisches Mehrschichtsystem oder mehrere dieser Mehrschichtsysteme können übereinander auf der Glas- oder Polymeroberfläche ausgebildet worden sein. Dabei kann auf herkömmliche Vakuumbeschichtungsverfahren, insbesondere PVD-Verfahren und besonders vorteilhaft auf Magnetronsputtern zurückgegriffen werden.

Für die Ausbildung der Keim- und Deckschicht können Mischoxide ZnO:X mit X z.B. Al₂O₃, Ga₂O₃, SnO₂, In₂O₃ oder MgO verwendet werden. Die Keimschicht und/oder die Deckschicht sollten eine Schichtdicke im Bereich 5 nm bis 15 nm und die Silberschicht eine Schichtdicke zwischen 5 nm und 25 nm, bevorzugt 10 nm aufweisen.

Die Deckschicht kann auch aus einer dünnen Metallschicht - einer sogenannten Blockerschicht - bestehen, wobei Blockerschichen typsicherweise aus Ti, NiCr und Cu gebildet werden und Schichtdicken < 5nm aufweisen.

Es besteht vorteilhaft die Möglichkeit, zusätzliche dielektrische Schichten auszubilden, die ein solches Mehrschichtsystem von beiden Seiten einfassen.

Zur Realisierung eines optischen Mehrsilberschichtsystems können in einer Abfolge von Beschichtungsschritten zwei oder mehrere Einsilberschichtsysteme, bevorzugt drei Einsilberschichtsysteme abgeschieden werden. Bei einem Einsilberschichtsystem kann es sich um einen Aufbau aus einer dielektrischen Schicht, einer dünnen Keim-, einer Silberschicht, einer Deckschicht und einer abschließenden dielektrischen Schicht handeln.

Um die gewünschten optischen Eigenschaften erreichen zu können, sollten die Dicken der Silberschichten sowie die Dicken der dielektrischen Schichten angepasst werden.

Die in einem solchen Mehrschichtsystem vorhandenen dielektrischen Schichten haben üblicherweise eine Brechzahl von n > 1,8 bei einer Wellenlänge von 550 nm sowie geringere Absorption, und können beispielsweise aus In₂O₃ ausgebildet sein.

Ein zwischen zwei Silberschichten ausgebildeter dielektrischer Schichtaufbau, der sich aus Deckschicht, dielektrischer Schicht und Keimschicht zusammensetzen kann, hat die Wirkung einer dielektrischen Abstandsschicht in einem optischen Filtersystem zur Definition der Lage des spektralen Transmissionsbereiches und der farblichen Anmutung eines Verbundglases. Die Verwendung von dielektrischen Werkstoffen als Keim- und Deckschicht ist vorteilhaft, da die Dicken der Keim- und Deckschichten zur Schichtdicke dielektrischer Abstandsschichten beitragen und dabei eine entsprechende optische Wirkung, wie andere dielektrische Werkstoffe hervorrufen, so dass sie zur gesamten optischen Wirkung beitragen.

So konnte bei einem Mehrschichtsystemaufbau mit drei von jeweils mit einer Keim- und Deckschicht sowie dielektrischen Schichten eingefassten Silberschichten auf einer PET-Folie als Substrat und der Verwendung einer so beschichteten Folie in einem Glaslaminat ein Gesamtanteil an transmittierter Strahlung T_{TS} < 40 %, der Anteil an transmittierter Strahlung im Wellenlängenspektrum des sichtbaren Lichts Tᵥᵢₛ > 70 %, der Anteil der reflektierten Strahlung im Wellenlängenspektrum des sichtbaren Lichts Rᵥᵢₛ < 10 % gehalten werden.

Weitere Möglichkeiten und Hinweise für die Herstellung und Parameter optischer Mehrschichtsysteme, wie sie bei der Erfindung einsetzbar sind, können auch der nicht vorveröffentlichten DE 10 2011 116 191 entnommen werden, auf deren Offenbarungsgehalt vollumfänglich Bezug genommen wird.

Nachfolgend soll die Erfindung beispielhaft näher erläutert werden.

Dabei zeigen:
Figur 1 ein Diagramm mit Reflexionsfarben innerhalb von Farbräumen bei senkrechtem Lichteinfall;
Figur 2 ein Diagramm mit Reflexionsfarben innerhalb von Farbräumen bei Lichteinfall unter einem Winkel von 60°;
Figur 3 ein Beispiel in schematischer Form, bei dem drei Silberschichten mit jeweils einer Keim- und Deckschicht in einem Mehrschichtsystemaufbau vorhanden sind und
Figur 4 eine schematische Darstellung für den Einbau eines erfindungsgemäßen Mehrschichtsystems mit in einem Verbundglas eingebetteter Kunststofffolie.

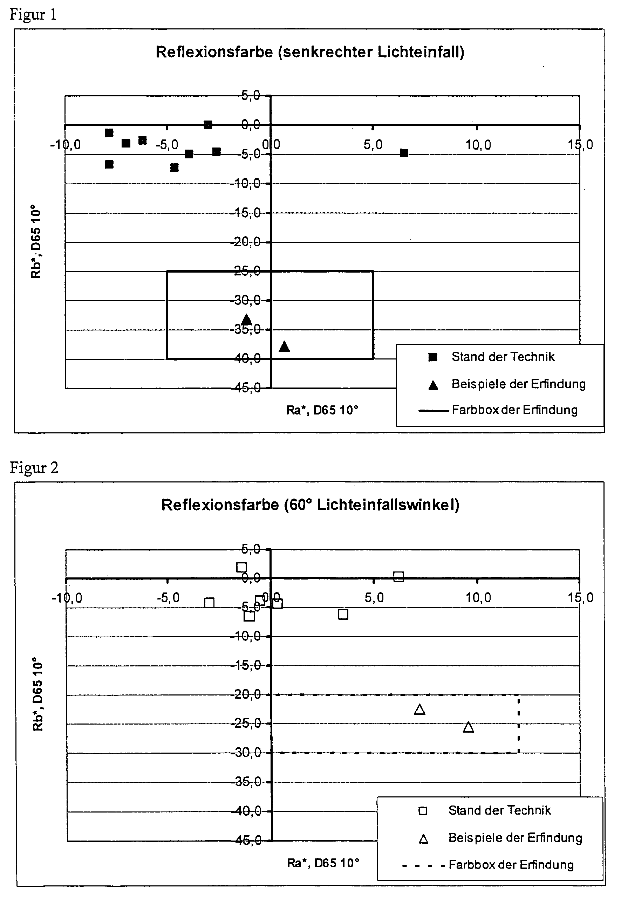

Das in Figur 1 gezeigte Diagramm gibt Reflexionsfarben innerhalb von Farbräumen bei senkrechtem Lichteinfall an. Dabei wurden die einzelnen Werte für die Reflexionsfarben, wie im allgemeinen Teil der Beschreibung erklärt, bestimmt. Nach dem Stand der Technik ist ein Farbraum für die Werte Ra* von 0 bis -5 und für die Werte Rb* von -8 bis -4 bevorzugt. Konkret erreichte Werte sind dabei mit ■ markiert. Es wird deutlich, dass diese alle im grünlichen Farbbereich und lediglich ein beispielhafter Wert im rötlichen Bereich liegen. Die gezeigten Farbkoordinaten wurden an im Markt befindlichen Verbundgläsern (Kfz-Windschutzscheiben) bestimmt. Sie markieren dabei den Stand der Technik und weisen aber alle ein TTS > 40% (> 45%) auf.

Der Farbraum der erfindungsgemäß eingehalten werden soll ist im Diagramm unten dargestellt und charakterisiert die tief blaue Reflexionsfarbe. Es sind auch zwei konkrete Werte mit ▲ markiert, die an erfindungsgemäßen Verbundgläsern bestimmt wurden (ein Ausführungsbeispiel siehe unten).

Im in Figur 2 gezeigten Diagramm sind entsprechende Farbräume und Werte für einen Lichteinfall unter 60° und einer Bestrahlungsquelle D65 eingezeichnet. Die konkreten Werte gemäß dem Stand der Technik sind mit □ und für erfindungsgemäße Reflexionsfarben mit Δ markiert.

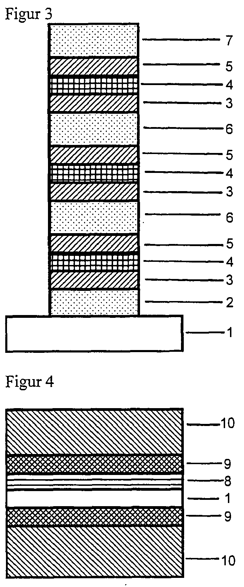

Der in Figur 3 gezeigte Mehrschichtsystemaufbau mit drei Silberschichten 4, die jeweils zwischen einer Keimschicht 3 und Deckschicht 5 ausgebildet worden sind, wurde durch drei Beschichtungsschritte auf einem PET-Substrat 1 realisiert.

So sollte die auf dem Substrat 1 ausgebildete dielektrische Schicht 2 aus In₂O₃ eine Schichtdicke von 20 nm bis 50 nm, die dielektrischen Schichten 6 aus In₂O₃, die zwischen einer Deckschicht 5 und einer Keimschicht 3 ausgebildet sind, sollten eine Dicke im Bereich 40 nm bis 150 nm aufweisen. Die dielektrische Schicht 7 aus In₂O₃, die an der äußeren dem Substrat 1 abgewandten Oberfläche ausgebildet ist, sollte eine Dicke im Bereich 20 nm bis 70 nm haben. Sämtliche Silberschichten sollten eine Schichtdicke im Bereich 7 nm bis 25 nm aufweisen.

Im Weiteren kann das Mehrschichtsystem bestehend aus drei übereinander ausgebildeten der Erfindung entsprechenden Mehrschichtsystemen durch Anpassung einzelner Schichtdicken dahingehend optimiert werden, um die Eigenschaften T_{TS} < 40 %, Tᵥᵢₛ > 70% und Rᵥᵢₛ < 10 % in einem Glaslaminat zu realisieren. Der Aufbau des "Glaslaminates" ist in Figur 4 aufgezeigt. Dabei sind 1 ein PET Substrat, 8 ein erfindungsgemäßes Mehrschichtsystem mit drei Silberschichten, 9 PVB (Polyvinyl Butyral)-Schichten und 10 Glas.

Im in Figur 3 dargestellten Beispiel wurden die Schichtdicken für die Keimschichten 3 bei 8 nm sowie die Deckschichten 5 bei 7 nm belassen. Die Silberschichten 4 hatten folgende Dicken (vom Substrat 1 beginnend) erste Silberschicht = 8,7 nm, zweite Silberschicht = 16,9 nm und dritte Silberschicht = 13,7 nm. Die dielektrischen Schichten wurden aus In₂O₃ hergestellt und hatten folgende Dicken ebenfalls ausgehend vom Substrat 1-1. Schicht 2 aus In₂O₃ = 24 nm, 2. Schicht 6 aus In₂O₃ = 76 nm, 3. Schicht 6 aus In₂O₃ = 90 nm und 4. Schicht 7 aus In₂O₃ = 32 nm.

Mit diesem Schichtsystem wurden im "Glaslaminat" folgende Werte erreicht:
Tᵥᵢₛ (A, 2°) = 72,4%
Rᵥᵢₛ (A, 2°) = 9,1 %
T_{T5} (ISO) = 38,1%
Ra* (D65, 10°) senkrecht = 0,7
Rb* (D65, 10°) senkrecht = -38,0
Ra* (D65, 10°) Lichteinfall 60° = 9,5
Rb* (D65, 10°). Lichteinfall 60° = -25,5

## Patentansprüche

1. Verbundglas für die Anwendung in Fahrzeugen oder der Architektur, an dem ein optisches Mehrschichtsystem vorhanden ist, das eine totale solare Transmission T_{TS} < 40 %, eine Transmission Tᵥᵢₛ im Wellenlängenbereich des sichtbaren Lichts > 70 %, eine Reflexion im Wellenlängenbereich des sichtbaren Lichts eine Reflexion Rᵥᵢₛ < 12% aufweist und eine Reflexionsfarbe bestimmt nach ASTM 308 (Beleuchtungsquelle D65 und Standardbeobachter 10°) für Reflexion bei senkrechtem Lichteinfall innerhalb eines Farbraums, der durch die Werte Ra* von -5 bis 5 und Rb* von -25 bis -40 begrenzt ist, aufweist und/oder innerhalb eines Farbraums der durch die Werte Ra* von 0 bis 12 und Rb* von -20 bis -30 begrenzt ist bei einem Lichteinfallswinkel von 60°.

2. Verbundglas nach Anspruch 1, **dadurch gekennzeichnet, dass** die Reflexionsfarbe bei senkrechtem Lichteinfall um ein Intensitätszentrum Ra* = 0, Rb* =-35 innerhalb des/der Farbraumes/-räume in einem Bereich von ± 5 jeweils für die Werte von Ra* und Rb* innerhalb eines kleineren Farbraumes liegt.

3. Verbundglas nach Anspruch 1, **dadurch gekennzeichnet, dass** die Reflexionsfarbe bei einem Lichteinfallswinkel von 60° um ein Intensitätszentrum Ra* = 7, Rb* =-25 innerhalb des/der Farbraumes/-räume in einem Bereich von ± 5 jeweils für die Werte von Ra* und Rb* innerhalb eines kleineren Farbraumes liegt.

4. Verbundglas nach einem der vorhergehenden Ansprüche, **dadurch gekennzeichnet, dass** das optische Mehrschichtsystem mit mindestens einer Schicht aus Silber oder einer Silberlegierung und mindestens einer dielektrischen Schicht gebildet ist.

5. Verbundglas nach einem der vorhergehenden Ansprüche, **dadurch gekennzeichnet, dass** eine Silberschicht oder eine mit einer Silberlegierung gebildete Schicht eine Schichtdicke im Bereich 5 nm bis 25 nm und eine dielektrische Schicht eine Schichtdicke im Bereich 5 nm bis 150 nm aufweist.

6. Verbundglas nach einem der vorhergehenden Ansprüche, **dadurch gekennzeichnet, dass** das optische Schichtsystem vorzugsweise drei Silberschichten enthält, die durch dielektrische Abstandsschichten von einander getrennt sind.

## Claims

1. A laminated glass for use in vehicles or in architecture, said laminated glass comprising an optical multilayer system **characterized by** a total solar transmission T_{TS} < 40%, a transmission Tᵥᵢₛ in the visible light wavelength range of > 70%, a reflection in the visible light wavelength range having a reflection Rᵥᵢₛ < 12%, and a reflection color determined according to ASTM 308 (illumination source D65 and standard observer 10°) for reflection upon vertical light incidence within a color space that is limited by the values Ra* of -5 to 5 and Rb* of -25 to -40 and/or within a color space that is limited by the values Ra* of 0 to 12 and Rb of -20 to -30 upon a light incidence angle of 60°.

2. A laminated glass according to claim 1, **characterized in that** said reflection color lies within a smaller color space about an intensity center Ra* = 0, Rb* = -35 within the color space /the color spaces, within a range of ±5 for each of the values for Ra* and Rb* upon vertical light incidence.

3. A laminated glass according to claim 1, **characterized in that** said reflection color lies within a smaller color space about an intensity center Ra* = 7, Rb* = -25 within the color space / the color spaces, within a range of ±5 for each of the values for Ra* and Rb* = upon a light incidence angle of 60°.

4. A laminated glass according to one of the preceding claims, **characterized in that** said optical multilayer system comprises at least one layer of silver or a silver alloy and at least one dielectric layer.

5. A laminated glass according to one of the preceding claims, **characterized in that** a silver layer or a layer comprising a silver alloy has a layer thickness ranging from 5 nm to 25 nm and a dielectric layer has a layer thickness ranging from 5 nm to 150 nm.

6. A laminated glass according to one of the preceding claims, **characterized in that** the optical multilayer system comprises, preferably three, silver layers that are separated from one another by dielectric spacer layers.

## Revendications

1. Verre feuilleté pour l'application dans des véhicules automobiles ou l'architecture, sur lequel un système optique à couches multiples est présent, lequel présente une transmission solaire totale T_{TS} < 40 %, une transmission Tᵥᵢₛ dans le domaine des longueurs d'onde de la lumière visible > 70 %, une réflexion dans le domaine des longueurs d'onde de la lumière visible une réflexion Rᵥᵢₛ < 12 % et présente une couleur de réflexion déterminée selon ASTM 308 (source d'illumination D65 et examen standard 10°) pour une réflexion lors d'une incidence de lumière perpendiculaire dans un espace de couleur, qui est limité par les valeurs Ra* de -5 à 5 et Rb* de -25 à -40 et/ou à l'intérieur d'un espace de couleur qui est limité par les valeurs Ra* de 0 à 12 et Rb* de -20 à -30 pour un angle d'incidence de lumière de 60°.

2. Verre feuilleté selon la revendication 1, **caractérisé en ce que** la couleur de réflexion pour une incidence de lumière perpendiculaire autour d'un centre d'intensité Ra* = 0, Rb* = -35 à l'intérieur du/des espace/espaces de couleur dans un domaine de ± 5 à chaque fois pour les valeurs de Ra* et Rb* se trouve à l'intérieur d'un espace de couleur plus petit.

3. Verre feuilleté selon la revendication 1, **caractérisé en ce que** la couleur de réflexion pour un angle d'incidence de lumière de 60° autour d'un centre d'intensité Ra* = 7, Rb* = -25 à l'intérieur du/des espace/ espaces de couleur dans un domaine de ± 5 se trouve à chaque fois pour les valeurs de Ra* et Rb* à l'intérieur d'un espace de couleur plus petit.

4. Verre feuilleté selon l'une quelconque des revendications précédentes, **caractérisé en ce que** le système optique à couches multiples est formé avec au moins une couche d'argent ou d'un alliage d'argent et au moins une couche diélectrique.

5. Verre feuilleté selon l'une quelconque des revendications précédentes, **caractérisé en ce qu'**une couche d'argent ou une couche formée avec un alliage d'argent présente une épaisseur de couche dans le domaine de 5 nm à 25 nm et une couche diélectrique présente une épaisseur de couche dans le domaine de 5 nm à 150 nm.

6. Verre feuilleté selon l'une quelconque des revendications précédentes, **caractérisé en ce que** le système optique à couches contient de préférence trois couches d'argent, lesquelles sont séparées les unes des autres par des couches diélectriques d'espacement.
